# EUROPÄISCHE PATENTSCHRIFT

(11) **EP 1 178 918 B1**
(45) Veröffentlichungstag und Bekanntmachung des Hinweises auf die Patenterteilung: **09.04.2003**
(21) Anmeldenummer: 00947755.5
(22) Anmeldetag: 17.05.2000
(51) Int. Cl.: B62D 25/12, B60R 21/34

(54) **FRONTHAUBENANORDNUNG**
FRONT HOOD ASSEMBLY
ENSEMBLE CAPOT AVANT

(30) Priorität: 17.05.1999 DE 19922107; 08.10.1999 DE 19948881
(43) Veröffentlichungstag der Anmeldung: 13.02.2002
(73) Patentinhaber: Edscha AG, 42855 Remscheid (DE)
(72) Erfinder: POLZ, Andreas, D-45881 Gelsenkirchen (DE)
(74) Vertreter: Sparing, Rolf Klaus
(86) Internationale Anmeldenummer: DE0001600
(87) Internationale Veröffentlichungsnummer: WO00069706

(56) Entgegenhaltungen:
- EP-A- 0 509 690
- DE-A- 2 711 339
- DE-A- 19 747 417
- DE-U- 29 703 102
- JP-A- 60 123 682
- PATENT ABSTRACTS OF JAPAN vol. 008, no. 120 (M-300), 6. Juni 1984 (1984-06-06) & JP 59 026370 A (NISSAN JIDOSHA KK), 10. Februar 1984 (1984-02-10)

## Beschreibung

Die Erfindung betrifft eine Fronthaubenanordnung nach dem Oberbegriff des Anspruchs 1.

Aus der Praxis sind inzwischen zahlreiche Sicherheitseinrichtungen wie Airbag und dgl. für Insassen von Personenkraftwagen bekannt. Dagegen sind Schutzmaßnahmen für Fußgänger, die vom Bug einen Personenkraftwagen erfaßt werden, bisher kaum vorgeschlagen oder praktisch umgesetzt worden. Als besonders problematisch erweisen sich Unfälle mit Fußgängern, die bei Geschwindigkeiten bis zu 60 km/h erfolgen, da der Fußgänger, wenn er frontal erfaßt wird, oft mit dem Kopf auf die Motorhaube des Personenkraftwagen aufschlägt und an dieser Verletzung stirbt. Die Schwere der Verletzung ergibt sich dadurch, daß die zumeist aus dünnem Blech ausgebildete Front- bzw. Motorhaube zwar dazu neigen würde, sich zu verbiegen, es aber zu einem Aufschlag auf unter der Motorhaube angeordneten, praktisch nicht oder nur schwer deformierbaren Teilen wie dem Motorblock, dem Federbeindohm, dem Luftfilter, dem Ventildeckel oder den Längs- und Querträgern des Fahrzeugs kommt. Es wäre wünschenswert, wenn der Aufprall insbesondere des Kopfes eines Fußgängers, in seinen Folgen abgemildert werden könnte. Bei Geschwindigkeiten über 60 km/h wird dagegen der Fußgänger, nachdem er erfaßt wurde, über das Fahrzeug geschleudert.

DE-C-29 22 893 schlägt vor, die Motorhaube und den Kotflügel im Bereich der zwischen diesen beiden Teilen gebildeten Fuge mit entlang der beiden Teile verlaufenden, energieabsorbierenden U-Profilen auf Aufbauteilen abzustützen, die im Falle eines Zusammenpralls den Aufprall in Deformationsenergie umwandeln. Nachteilig bei dieser Anordnung ist einerseits, daß schon erhebliche Kräfte auf die Profile einwirken müssen, um diese zu verbiegen. Zudem sind diese sonst nutzlosen U-Profile kostspielig in der Anschaffung und aufwendig zu montieren.

DE-A-27 37 876 beschreibt eine Aufprallschutzvorrichtung, die ein netzartiges Auffangelement mittels einer vorgespannten Schwenkklappe aus einer Ruheposition, in der das Netz im wesentlichen an der Fronthaube anliegt, in eine Auffangposition verlagert, welche im wesentlichen vor der Windschutzscheibe des Kraftfahrzeugs verläuft. Diese Einrichtung dient mehr der Windschutzscheibe als dem Schutz des Fußgängers vor einem zu harten Aufprall auf die Fronthaube. Außerdem kann jede Berührung des die Schwenkbewegung auslösenden, in der vorderen Stoßstange integrierten Sensors das Netz dazu veranlassen, ausgelöst zu werden, wodurch eine Vielzahl von Konstellationen eintreten, in denen das Netz dem Fahrer die gesamte Sicht nimmt.

DE-A-28 41 315 beschreibt eine Sicherheitseinrichtung, bei der in Reaktion auf ein Signal eines im Frontbereich eines Fahrzeugs angeordneten Sensors zur Erfassung einer Kollision mit einem Fußgänger die Fronthaube aus einer Ruheposition in eine demgegenüber angehobene Aufprallposition durch eine Kolbe-Zylinder-Einheit verlagert wird, wobei die Verlagerung durch einen Energiespeicher erfolgt. Beim Anheben wird die Fronthaube um eine an der Stirnseite des Fahrzeugs angeordnete horizontale Drehachse verschwenkt.

DE-A-197 10 417 beschreibt eine Anordnung zum Anheben der Fronthaube, bei der eine Verschwenkung um eine an der Stirnseite des Fahrzeugs angeordnete horizontale Drehachse durch dieselbe Gasfeder ausgelöst wird, die auch das Anheben der an der anderen Ende angelenkten Fronthaube unterstützt.

DE-A-197 21 565 beschreibt eine Sicherheitseinrichtung an Kraftfahrzeugen zum Anheben der Fronthaube, bei der das Anheben der Fronthaube geschwindigkeitsabhängig durch einen mit dem Haubenschloß integrierten Mechanismus erfolgt. Hierzu wird entweder die üblicherweise aus Sicherheitsgründen aus der Fahrerkabine ausgelöste Entriegelung des mit einer Druckfeder beaufschlagten Schlosses durch einen Sensor, der durch einen Aufprall ausgelöst wird, ausgelöst, oder alternativ hierzu insbesondere bei höheren Geschwindigkeiten eine in den Schließbolzen der Haubenschlosses integrierte Kolben-Zylinder-Einheit durch eine Treibladung expandiert. Nachteil dieser Anordnung ist zunächst, daß die zum Schließen der Fronthaube erforderliche Kraft einen bestimmten Schwellenwert nicht übersteigen darf, um dem Fahrer zu erlauben, die Fronthaube bequem zu schließen. Da die auftreffenden Kräfte bei einem Personenunfall bedeutend sind, wird die Fronthaube schnell herabgedrückt und es kommt zu den bekannten Personenschäden insbesondere im Kopfbereich. Auch das Vorsehen einer Treibladung zum Expandieren Kolben-Zylinder-Einheit ist problematisch, da deren Haltbarkeit, insbesondere bei wenig geschützter Anordnung, begrenzt und der Austausch problematisch ist. Außerdem besteht die Gefahr, daß Druckfeder und die Kolben-Zylinder-Einheit gleichzeitig ausgelöst werden, wodurch die Öffnung der Fronthaube so groß werden würde, daß der Fahrtwind die Haube gegen die Windschutzscheibe in Anlage bringt und dem Fahrer die Sicht versperrt.

DE-A-27 11 338 beschreibt eine Einrichtung zum Dämpfen des Aufpralls eines Fußgängers, bei der ein Luftsack im Bereich des Windlaufs angeordnet ist, dessen Befüllung durch eine Sensorsignal ausgelöst wird. Dabei kann der Luftsack so angeordnet sein, daß er zugleich einen Teil der Fronthaube anhebt, wobei er hierzu eine Federkraft überwindet, die zwei über einen Drehpunkt miteinander verbundene Lenker, von denen einer drehbar an der Fronthaube und der andere drehbar an einem festen Teil des Kraftfahrzeugs angeordnet ist, in eine angewinkelte Lage vorspannt. Ferner wird vorgeschlagen, nachgiebige Profilkörper in Streifenform in der Art einer Dichtung zwischen Haube und Seitenteilen anzuordnen, um damit einen weiteren Schutz beim Aufprall zu schaffen.

DE-A-27 11 339 beschreibt eine an der Frontseite angelenkte Fronthaube, bei der die Anlenkung derart nachgiebig ausgebildet ist, daß sie eine horizontale Verschiebung der Fronthaube durch den Anprall eines Fußgängers zuläßt, wobei die nach hinten verlagerte Fronthaube an der hinteren Seite mit einem Ende eines starren Verriegelungselements verbunden ist, dessen anderes ,Ende bei Verschiebung der Fronthaube nach hinten in einer Führungskurve derart nach oben und nach hinten verlagert wird, daß die Fronthaube eine Bewegung nach oben ausführt. Dieses Anheben funktioniert nur unter der Voraussetzung, daß es tatsächlich zu einer horizontalen Verlagerung der Fronthaube kommt, was beispielsweise beim Aufprall von Kindern nicht immer gewährleistet ist.

EP-A-0 509 690 beschreibt eine Fronthaube, die an ihrer Vorderseite derart an der Fahrzeugstruktur angelenkt ist, daß aufgrund eines Anpralls die Fronthaube nach hinten verlagert wird, wobei die an der hinteren Seite angeordneten Verschluß- bzw. Schwenkmittel aufgrund einer Bewegung der Fronthaube nach hinten eine Schwenkbewegung der Fronthaube nach oben auslösen, so daß der Deformationsweg der Haube unter dem Aufprall eines Fußgängers vergrößert wird. Die Schwenkbewegung wird beispielsweise durch ein Viergelenkscharnier geführt, das sonst zur Verschwenkung der Fronthaube eingesetzt wird, wenn der Zugang zum Motor und anderen Teilen freigegeben werden soll. Auch hier tritt ein Anheben der Fronthaube erst mit sehr kräftigem Verlagern der Fronthaube ein, während ein schwacher Aufprall die Fronthaube nicht nach hinten und somit auch nicht nach oben verlagert.

DE-A-197 12 961 beschreibt die Anordnung einer Fronthaube an einem Fahrzeug, bei der ein Scharnier auf einem Scharnierträger angeordnet ist, welcher Scharnierträger im Falle eines aufprallenden Fußgängers nach oben verschwenkt wird, um die Fronthaube anzuheben. Problematisch ist bei dieser Anordnung, daß das Haubenschloß für die Fronthaube eine Schwenkachse festlegt, die keine wahlfreie Verlagerung des Scharnierträgers zuläßt, weshalb der beschriebene Scharnierträger beispielsweise blockiert.

DE-A-197 06 878 beschreibt eine Motorhaube, die in der Art eines Schutzschildes bei einem Frontalaufprall im wesentlichen den Bereich der Windschutzscheibe abdecken soll, um Fahrzeuginsassen vor in die Fahrgastzelle eindringenden Gegenständen zu schützen. Hierzu wird die Fronthaube mittels eines mit einer Sollbruchstelle ausgebildeten Bolzens im Haubenschloß gehalten, mittels einer U-bügelförmigen Scharnieranordnung an der Karosserie gelagert und mittels einer Spannanordnung in Richtung auf ein Aufrichten der Fronthaube im Falle eines Frontalaufpralls vorgespannt. Zunächst ist zu bemerken, daß die vorgeschlagene Lösung in keiner Weise geeignet ist, einem Fußgängeraufprall zu begegnen, da der Aufprall zumindest die Kraft zum Abscheren des Bolzens im Haubenschioß aufbringen müßte, ein derart schwach ausgebildeter Bolzen allerdings für den täglichen Einsatz nicht brauchbar wäre. Überdies erfolgt das Anheben der Fronthaube zu langsam und aufgrund der Verlagerung des frontseitigen Endes wird der Motorraum mit seinem für Fußgänger gefährlichen Bestandteilen gerade freigegeben, während die durch eine Verbundglaswindschutzscheibe ausreichend geschützten Insassen des Fahrzeugs zusätzlich gesichert werden.

EP-B-0 630 801 beschreibt eine Fronthaubenanordnung, bei der die Fronthaube über im frontalen Bereich der Karosserie angeordnete Gelenkanordnungen gelagert und im Bereich des Windlaufs angeordnete Arretiervorrichtung gehalten ist, bei der die ähnlich einem Viergelenk ausgestalteten Gelenkbaugruppen derart ausgestaltet sind, daß sie einerseits zum Öffnen der Fronthaube durch Kippen um eine im vorderen Bereich des Fahrzeugs verlaufende Achse verschwenkt werden können und andererseits bei Ausüben einer auf die Vorderkante der Fronthaube wirkenden Kraft durch das Viergelenk nach oben verlagert werden. Zu diesem Zweck ist im Bereich der Arretiervorrichtungen eine ebenfalls nach oben zu verlagernde Fronthaube vorgesehen, wobei dies beispielsweise dadurch erfolgt, daß ein aushängbarer Arretierarm nach Abscheren eines Scherbolzens von der mit der Fronthaube verbundenen Halterung eine weitere Schwenkbewegung im wesentlichen nach oben zuläßt. Die Achse, in der der Arretierbolzen gehaltert ist, bleibt hierbei unverändert. Alternativ wird eine Verschiebung der Achse in einer Führungsschiene vorgeschlagen, die jedoch in erster Linie ein Anheben der Fronthaube nach sich zieht.

EP-B-0 644 104 beschreibt eine Fronthaubenanordnung, bei der die Fronthaube um ein im Bereich ihrer Vorderkante vorgesehenes Scharnier oder Gelenk mit ihrer Hinterkante nach oben schwenkbar ist, um einen Zugang zum Motorraum zu schaffen, wobei das die Fronthaube frontal führende Scharnier nicht an der Karosserie befestigt ist, sondern an einer Frontpartie des Kraftwagens, die beispielsweise den Kühlerbereich umfaßt, welche über ein weiteres Scharnier mit einem vorderen Querträger der Karosserie klappbar verbunden ist, so daß bei Auftreffen eines Fußgängers auf die Kühlerpartie oder auf die Fronthaube beide Teile nach hinten verlagert werden. Hierzu ist im Bereich des hinten vorgesehenen Schlosses eine Führungsbahn vorgesehen, in der eine Rolle des Schlosses im wesentlichen derart verlagerbar ist, daß die Fronthaube nach oben verschoben wird.

Die gattungsbildende DE-A-197 47 417 beschreibt - auch, aber nicht nur für die Anwendung einer Fronthaubenverriegelung - eine Befestigungsvorrichtung zum Anbringen an Fahrzeugen, bei der ein sich starr zur Karosserie verhaltenes Anschlußteil bei Überschreiten einer voreingestellten Last eine Verlagerung gegenüber der Karosserie unter Verformung eines Deformationselements ausführt

Insgesamt ist noch keine Lösung vorgeschlagen worden, die eine kostengünstige und nach einem Einsatz leicht wiederherstellbare Anordnung vorschlägt, welche konstruktiv so ausgereift ist, daß sie in Serienfahrzeugen eingesetzt werden könnte.

Es ist die Aufgabe der Erfindung, eine Fronthaubenanordnung nach dem Oberbegriff des Anspruchs 1 vorzuschlagen, die eine kostenmäßig und technisch realisierbaren Fußgängerschutz liefert.

Diese Aufgabe wird bei der eingangs genannten Fronthaubenanordnung erfindungsgemäß mit den kennzeichnenden Merkmalen des Anspruchs 1 gelöst.

Zweckmäßigerweise ist das Haubenschloß in seinem geschlossenen Zustand derart ausgebildet, daß es ein horizontales Verlagern der Fronthaube zuläßt, um die durch die aufgrund des Schamiers im Überlastfall weiter nach hinten verlagerten, an der Fronthaube angreifenden Drehpunkte des wenigstens einen Lenkers des Scharniers durch eine entsprechende Verlagerungsbewegung der Fronthaube nach hinten zu ermöglichen. Zu diesem Zweck kann das Haubenschloß derart ausgebildet sein, daß es in einer üblichen Weise zur Entriegelung ausgebildet ist, im geschlossenen und verriegelten Zustand jedoch einen horizontalen Ausweichraum bereithält, der zweckmäßigerweise gegen einen Widerstand, der vorzugsweise reversibel oder irreversible deformierbar ist, die Verlagerung der Fronthaube nach hinten ermöglicht. So kann beispielsweise der Ausweichraum die Aufnahme für ein Energiespeicherglied wie eine Druckfeder bilden, die z.B. ein als Bügelteil ausgebildetes Halteteil der Fronthaube, das in dem Schloß verriegelt gehalten wird, in Richtung auf eine die Entriegelung ermöglichende Lage vorspannt und im Falle eines Fußgängeraufpralls gespannt wird, wodurch ein Teil der Aufprallenergie absorbiert wird. Diese Maßnahme ist besonders dann vorteilhaft, wenn der Aufprall des Kopfes eines Kindes, der überwiegend im vorderen Bereich der Fronthaube zu erwarten ist, abzufedern ist. Des weiteren ist es möglich, den Ausweichraum mit einem Kunststoffschaumteil auszukleiden, das unter dem Druck eines Aufpralls zerkrümelt und nach dem Aufprall durch ein Ersatzteil ersetzbar ist, wodurch die Funktionsfähigkeit der Fronthaubenanordnung auch nach einem ersten Aufprall für weitere Aufpralle gegeben ist.

Alternativ ist es möglich, das Haubenschloß insgesamt horizontal verlagerbar auszubilden und so die Bewegung der Fronthaube - ggf. unter Umwandlung von Aufprallenergie durch Spannen eines Energiespeichers oder Aufweiten ein als Preßpassung ausgebildeten Führung - nachvollziehen zu lassen. Hierzu ist das Haubenschloß vorteilhaft an der in Fahrtrichtung hinteren Seite des frontalen Querträgers der Karosserie angeordnet.

Die erfindungsgemäße Fronthaubenanordnung weist vorteilhaft drei Endstellungen auf, neben der bekannten Schließstellung, bei der die Fronthaube verriegelt ist und die während der Fahrt des Fahrzeugs eingenommen wird und der ebenfalls bekannten Öffnungsstellung, bei der der Zugang zu dem Motorraum für eine Bedienperson freigegeben ist noch eine dritte Endstellung, die als Überlaststellung bezeichnet werden kann und die nachstehend noch in Einzelheiten erläutert wird, um den Anforderungen an eine unter dem Aufprall eines Fußgängers zurückweichenden der Fronthaube zu genügen.

Das Mehrgelenk-Scharnier kann vorteilhaft als Viergelenk-Scharnier ausgebildet sein, es ist aber alternativ möglich, es als Siebengelenk-Scharnier auszubilden oder mit nur einem Lenker als Zweigelenk-Scharnier.

In der Ausgangslage ist die Fronthaube durch das Haubenschloß, das vorzugsweise im vorderen Bereich der Fronthaube angeordnet ist, verriegelt, wobei ein Viergelenk-Scharnier aus zwei Lenkern und zwei an den in den Endbereichen der Lenkern angeordneten Drehpunkten gelenkig mit den Lenkern verbundenen Scharnierteilen, die über bekannte Anschlagmittel der Fronthaube bzw. mit der Karosserie des Fahrzeugs verbunden sind, einen Schwenkweg der Fronthaube definiert, der ein freies hin und her schwenken der Fronthaube zwischen der Öffnungsstellung und der Schließstellung zur wahlweisen Freigabe des Zugangs zum Motorraum ermöglicht. In der Öffnungsstellung, deren Erreichen vorzugsweise mit Unterstützung einer Feder, beispielsweise einer Gasfeder, unterstützt ist, kann die Fronthaube über eine Stange zwischen Karosserie und Fronthaube gehalten werden, um einer Bedienperson einen ungefährdeten Zugang zu ermöglichen. Alternativ kann bei Erreichen einer Übertotpunktlage des Viergelenk-Scharniers bzw. der Viergelenk-Scharniere, da in der Regel an beiden hinteren Ecken der in der Abwicklung viereckig ausgebildeten Fronthaube jeweils eines angeordnet ist, die Fronthaube ohne externe Hilfsmittel gehalten sein.

Während der Fahrt des Fahrzeugs , bei dem es sich zweckmäßigerweise um einen Kraftwagen handelt, ist die Fronthaube in ihrer Schließstellung angeordnet und durch das Haubenschloß verriegelt, so daß der Motorraum, in dem eine Reihe von harten Teilen wie der Motorblock, der Federbeindohm und andere angeordnet sind, durch die Fronthaube in der Art einer schützende Hülle, die in einem ausreichenden Abstand von den wenigstens bei Aufprall für den Kopf eines Fußgängers schädlichen Teile angeordnet ist, einen wahlweise an der Unterseite der Fronthaube mit einem komprimierbar ausgebildeten, ggf. mit Aufprall- und/oder Schallenergie aufnehmenden Schaum ausgekleideten oder auch freien Abstand aufweist.

Die erfindungsgemäße Fronthaubenanordnung ermöglicht ausgehend zumindest von der Schließstellung der Fronthaube eine Verlagerung der Fronthaube in Richtung auf die Überlaststellung, in der der Abstand zwischen der Fronthaube und den gefährlichen Teilen des Motorraums reduziert ist, wobei erfindungsgemäß im Überlastfall das Viergelenk-Scharnier sowie ggf. weitere Teile der Fronthaubenanordnung, vorzugsweise auch das Haubenschloß, für die Verlagerung in Richtung auf die Überlaststellung bzw. in die Überlaststellung einen derartigen Anteil an Aufprallenergie des Fußgängers in Verlagerungs- bzw. Deformationsenergie umwandeln, daß der Aufprall bei einer Geschwindigkeit des Fahrzeugs von bis zu 60 Km/h für den Fußgänger mit hoher Wahrscheinlichkeit für diesen keine tödlichen Folgen mehr hat.

Unter der Last eines Aufpralls eines Fußgängers wird die Fronthaube gemäß einer bevorzugten Weiterbildung durch eine Änderung der Mehrgelenk-Anordnung des wenigstens einen Lenkers des Mehrgelenk-Scharniers in Richtung auf die Überlaststellung verlagert, wobei der Verlagerungsweg durch Umwandlung der Aufprallenergie aufgrund des allmählichen Nachgebens der Fronthaube den Aufprall mildert und damit die Schwere des Aufpralls reduziert. Es versteht sich, daß auch eine Deformationsenergie der Fronthaube selbst hierbei zu berücksichtigen ist, was durch die Einspannung in ein konventionelles Haubenschloß und zwei Viergelenk-Scharniere in der Regel nur begrenzt möglich wäre. Die Aufhebung z.B. der Viergelenkanordnung kann dadurch erfolgen, daß ein Lenker des Mehrgelenk-Scharniers zweiteilbar, zerstörbar oder mit veränderbarer Länge ausgebildet ist, oder daß ein Gelenk eines Lenkers des Viergelenk-Scharniers zum benachbarten Gelenk des anderen Lenkers einen veränderbaren Abstand aufweist. Wenn bei einem Viergelenk-Scharnier beide Lenker in der vorbezeichneten Weise ausgebildet sind, kann vorteilhaft die horizontale Verlagerung der Fronthaube stark herabgesetzt werden, wodurch der Ausweichraum klein ausgebildet werden kann.

Es versteht sich, daß besonders bevorzugt eine Fronthaubenanordnung ist, deren Verlagerungsbewegung im Haubenschloß vollständig reversibel ist, da insbesondere eine solche Anordnung sich in einfacher Weise bei routinemäßigen Überprüfungen des Fahrzeugs zu dessen technischer Überwachung auf Funktionsfähigkeit und Zuverlässigkeit prüfen läßt. Es ist daher zweckmäßig vorgesehen, daß für den Fall des Einsatzes von Bestandteilen, die eine irreversible Änderung im Falle eines Aufpralls ausführen, diese derart anzuordnen, daß sie durch optische Prüfung darauf untersucht werden können, ob sie bereits beschädigt sind.

Um eine Verlagerung ausgehend von der Schließstellung auf die Öffnungsstellung bzw. auf die Überlaststellung der Fronthaube relativ zur Karosserie des Fahrzeugs sicher zu stellen ist es zweckmäßig, daß das Viergelenk-Scharnier an die Fronthaube anschlagende Scharnierteil fest an der Fronthaube des Fahrzeugs anzuordnen, damit die Schwenkbewegung um die fronthaubenseitigen Drehpunkte der Lenker ausgeführt werden kann. Es ist aber auch möglich, für jedes Gelenk ein eigenes, evtl. relativ zum anderen verlagerbares Anschtagteil vorzusehen.

Weitere Vorteile und Merkmale der Erfindung ergeben sich aus der nachfolgenden Beschreibung sowie aus den abhängigen Ansprüchen.

Die Erfindung wird nachstehend unter Bezugnahme auf die anliegenden Zeichnungen anhand von bevorzugten Ausführungsbeispielen einer erfindungsgemäßen Fronthaubenanordnung näher erläutert.
- Fig. 1: zeigt eine ausschnittsweise schematisierte Seitenansicht eines Fahrzeugs mit einem bevorzugten Ausführungsbeispiel einer erfindungsgemäßen Fronthaubenanordnung.
- Fig. 2: zeigt eine schematische Seitenansicht einer ersten Ausführungsform eines Viergelenk-Scharniers der Fronthaubenanordnung aus Fig. 1 bei geschlossener Fronthaube.
- Fig. 3: zeigt eine schematische Seitenansicht des Viergelenk-Schamiers aus Fig. 2 bei geöffneter Fronthaube.
- Fig. 4: zeigt eine schematische Seitenansicht des Viergelenk-Scharniers aus Fig. 2 und 3 bei überlasteter Fronthaube.
- Fig. 5: zeigt eine schematische Seitenansicht einer ersten Ausführungsform eines Haubenschlosses der Fronthaubenanordnung aus Fig. 1 bei geschlossener Fronthaube.
- Fig. 6: zeigt eine schematische Seitenansicht einer weiteren Ausführungsform eines Haubenschlosses der Fronthaubenanordnung aus Fig. 1 bei geschlossener Fronthaube.

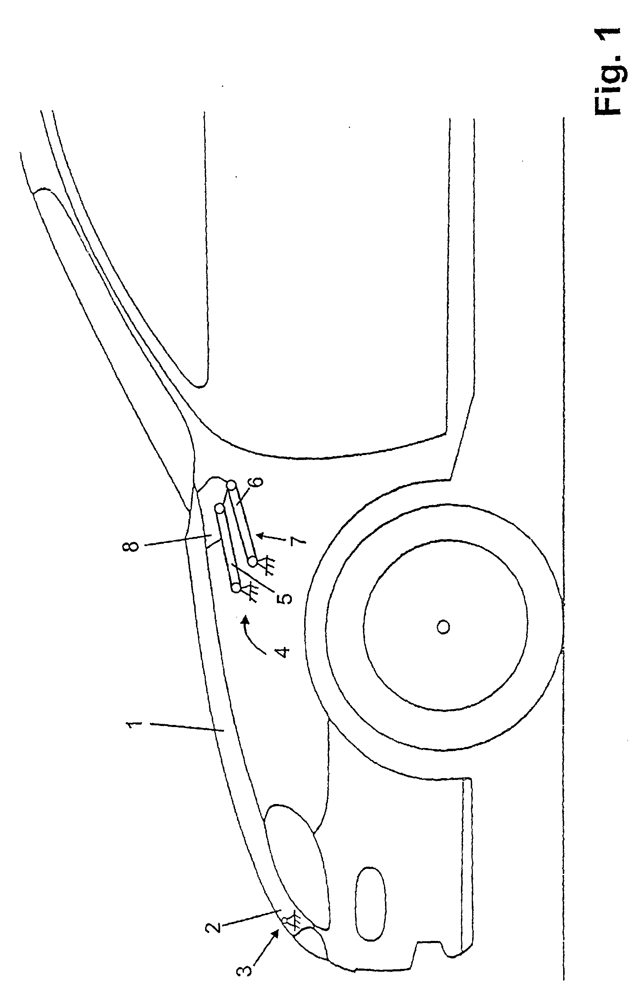

Fig. 1 zeigt in Seitenansicht die Frontpartie eines Kraftfahrzeuges, dessen Motorraum durch eine Fronthaube 1 verschließbar ist. Die Fronthaube 1 wird mittels eines im Vorderbereich 2 der Fronthaube 1 angeordneten Haubenschlosses 3 ver- bzw. entriegelt und ist an ihrer der Fahrerkabine zugewandten Seite jeweils randseitig mittels eines von zwei Scharnieren 4 an dem Rahmen der Karosserie angelenkt. Das Scharnier 4 ist vorliegend als Viergelenk-Scharnier ausgebildet, das aus einem längeren Lenker 5 und einem kürzeren Lenker 6 besteht, deren Gelenke an ein am Rahmen befestigten Teil 7 bzw. an einer an der Fronthaube 1 angeordnetes Teil 8 schwenkbar angelenkt sind. Die Fronthaube 1 läßt sich aus der in Fig. 1 dargestellten Schließstellung durch Verschwenken um die Gelenke am Rahmenteil 7 in seine Öffnungsstellung und wieder zurück verschwenken.

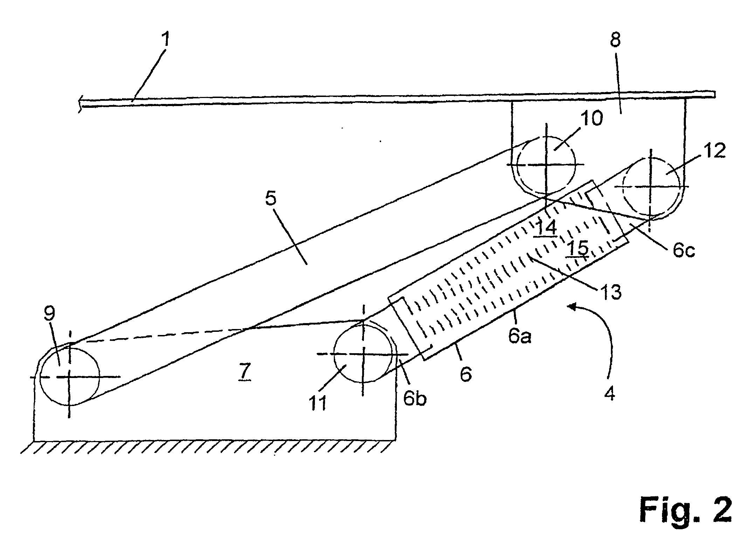

In Fig. 2 ist eine erste bevorzugte Ausführungsform des Scharniers 4 gezeigt, wobei die Drehgelenke des längeren Lenkers 5 mit 9 und 10 bezeichnet sind und die Drehgelenke des kürzeren Lenkers 6 mit 11 und 12 bezeichnet sind. Man erkennt, daß die Gelenke 9 bis 12 alle vier fest in dem zugeordneten Rahmenteil 7 bzw. Fronthaubenteile 8 angeordnet sind.

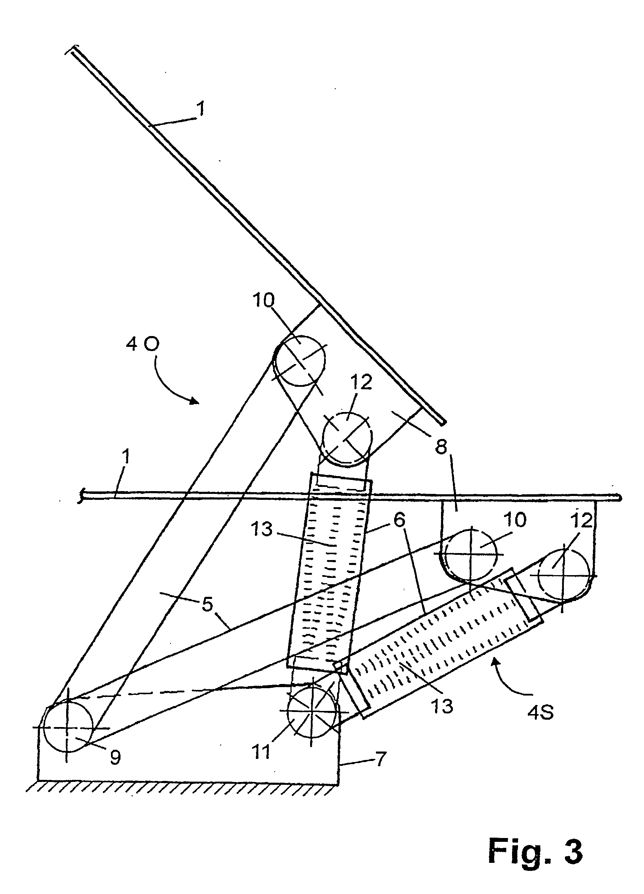

Während der längere Lenker 5 als starrer Lenker ausgebildet ist, ist der kürzere Lenker 6 in einem zentralen Bereich 6a, an den sich die die Gewerbe der Drehgelenke 11, 12 aufweisenden Endstücke 6b bzw. 6c anschließen, mit einer als Doppelfeder ausgebildeten integrierten Energiespeicher 13 ausgestattet, der eine Veränderung der Länge des kürzeren Lenkers 6 dergestalt zuläßt, daß der Abstand der Achsen der Drehlenke 11 und 12 veränderlich ist. Hierzu ist der mittels starker Zugfedern ausgebildete Energiespeicher 13 unter Überwindung seiner Vorspannung zu belasten, wobei die Last derart ausgelegt ist, daß sie das Eigengewicht der an dem Haubenteil 8 angeordneten Fronthaube 1 nennenswert übersteigen muß. Neben einer Druckfeder 14 ist in dem Abschnitt 6a des kürzeren Lenkers 6 auch eine Zugfeder 15 integriert, so daß der voreingestellte Abstand der Achsen der Drehgelenke 11, 12 von der im unbelasteten Zustand wiedergegebenen Länge des kürzeren Lenkers 6 eingehalten ist. Wie in Fig. 3 genauer zu sehen, lastet ein Teil des Eigengewichts der Fronthaube 1 in der in Fig. 3 dargestellten Öffnungsstellung des Viergelenkscharniers 4 aus Fig. 2 auf dem kürzeren Lenker 6, der unter dieser Last zur Vermeidung einer Schwenk-Kipp-Bewegung der Fronthaube 1 nur unwesentlich nachgeben soll. Die Druckfeder 14 und die Zugfeder 15 sind in den Fig. 2 bis 4 schematisch dargestellt und dienen in dieser schematischen Darstellung lediglich der Illustration der unterschiedlichen entlasteten bzw. belasteten Zustände des Viergelenk-Scharniers 4. Man erkennt insbesondere in Fig. 3, daß sowohl in der Schließstellung, die mit dem Symbol S angedeutet ist, als auch in der Öffnungsstellung, die mit dem Symbol O angedeutet ist, die Länge des kürzeren Lenkers 6 im wesentlichen unverändert bleibt.

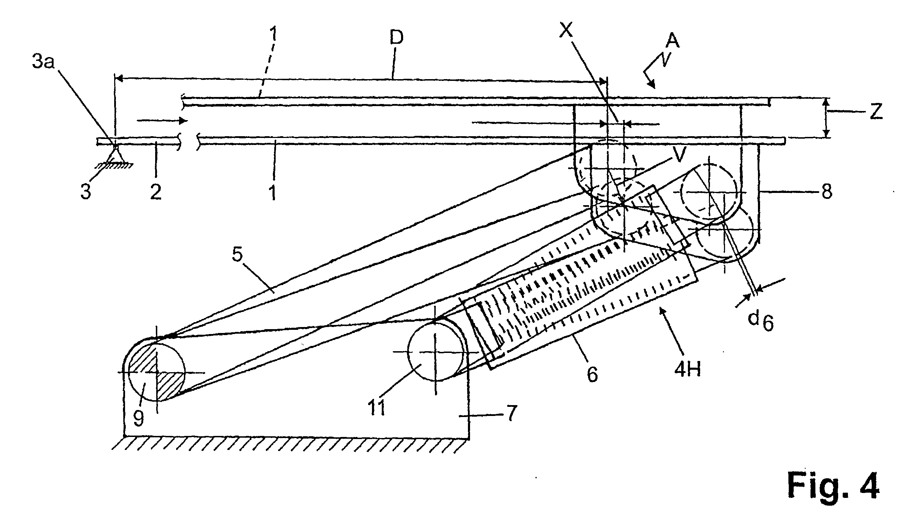

In Fig. 4 ist der Überlastfall aufgrund eines Fußgängeraufpralls auf die Fronthaube 1 und die sich hieraus ergebende Deformation des Viergelenk-Scharniers 4 insgesamt und insbesondere des kürzeren Lenkers 6 näher dargestellt. Gestrichelt ist in Fig. 4 die Schließstellung S dargestellt, während in durchgezogener Linie die Überlaststellung H aufgrund eines schematisch mit Pfeil A angedeuteten Aufpralls eines Fußgängers dargestellt ist. In Fig. 4 ist zudem schematisch das Haubenschloß 3 dargestellt, welches, wie in der schematischen Darstellung zu erkennen, verschieblich relativ zu der Karosserie angeordnet ist, um eine horizontale Verlagerung der Fronthaube 1, die einhergeht mit einem Verschwenken der Fronthaube 1 um die in dem Haubenschloß gebildete, mit 3a bezeichnete, Achse zu ermöglichen. Man erkennt, daß die Fronthaube 1 im Bereich des an diese angeschlagenen Haubenteils 8 einen Verlagerungsweg v ausführt, der mit dem Pfeil, der an der Achse des Drehgelenks 10 angetragen ist, illustriert ist. Der Weg v setzt sich aus einer horizontalen Komponente x und einer vertikalen Komponente z zusammen, die in Fig. 4 ebenfalls angetragen sind. Man erkennt also, daß bei Aufprall eines Fußgängers die Fronthaube sich um den Betrag z senkt und entsprechend ihren Abstand zu den gegebenenfalls harten und damit verletzungsgefährdenden Teilen im Motorraum verringert, während zugleich die Fronthaube 1 und damit auch das Haubenschloß 3 sich um den Betrag x, in Fahrtrichtung gesehen nach hinten, verlagert. Wäre der kürzere Lenker 6 ebenso wie der längere Lenker 5 starr ausgebildet, könnte die Verlagerungsbewegung durch das Viergelenk-Scharnier 4 nicht vollzogen werden, da die Viergelenke 9 bis 12 nur einen Schwenkweg, nämlich den, der für die Öffnungsbewegung der Fronthaube 1 zugrundegelegt wird, definieren und die Verlagerungsbewegung somit statisch überbestimmt wäre. Aufgrund der längenveränderbaren Ausbildung des kürzeren Lenkers 6 wird die statische Überbestimmung des Viergeienks 4 aufgehoben und die Umwandlung der Aufprallenergie eines Fußgängeraufpralls auf die Fronthaube 1 wird in die entsprechende Deformationsenergie (sowie in weitere, den Aufprall aus anderen Gründen abmindernde Energien) umgewandelt. Die Längenänderung des kürzeren Lenkers 6 ist in Fig. 4 mit d6 bezeichnet. Man erkennt, daß für eine relativ bedeutsame vertikale Verlagerung eine geringe Elongation des kürzeren Lenkers 6 ausreicht, die entlang einer stetigen Dehnungkurve d über z verläuft, so daß eine realistische Umwandlung der Aufprallenergie in Deformationsenergie des Energiespeichers 13 gegeben ist. Man erkennt ferner, daß durch die Elongation des kürzeren Lenkers 6 die beiden Lenker 5 und 6 ihre Winkellage zueinander geringfügig geändert haben, die sonst statisch das Viergelenk 4 bestimmt.

Im vorliegenden Beispiel beträgt die Verschiebung der Fronthaube 1 nach hinten ca. 0,61 % der Länge D der Fronthaube 1 bzw. des wirksamen Abstands zwischen dem Haubenschloß 3 und dem Drehgelenk 10. Die Verlängerung des kürzeren Lenkers 6 beträgt vergleichsweise hierzu nur ca. 0,13%, und liegt somit bei weniger als einem Viertel der Wegstrecke x. Die Höhenänderung z hängt von dem Meßpunkt an der Fronthaube ab und beträgt im Bereich des Haubenteils 8 etwa das Doppelte der Länge x, also ca. 1,2%.

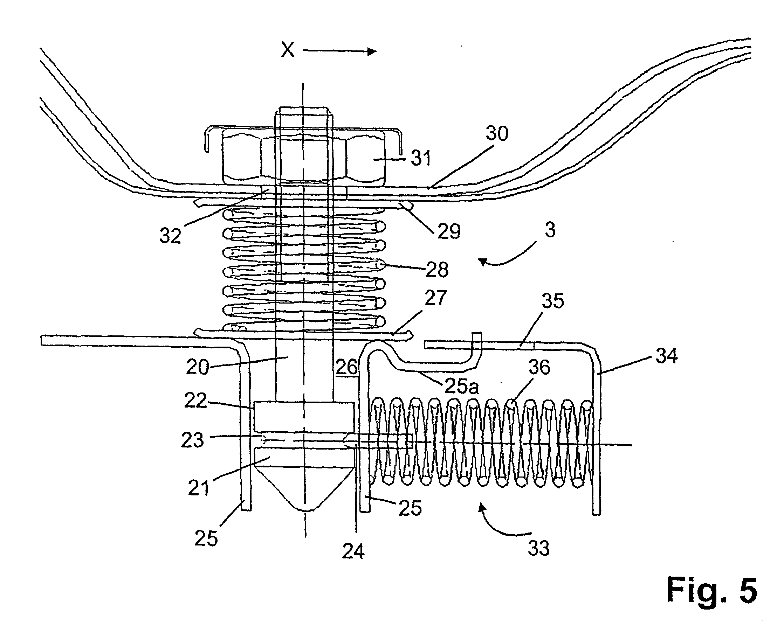

In Fig. 5 ist eine schematische Seitenansicht parallel zur Fahrtrichtung des Fahrzeugs eines einfachen Ausführungsbeispiels eines Haubenschlosses 3 gezeigt. Das Haubenschloß 3 umfaßt einen Riegelstift 20, der einen Riegelkopf 21 aufweist, dessen Ende konisch angeformt ist und einen gegenüber dem Durchmesser des Riegelstifts 20 verbreiterten Durchmesser mit Umfang 22 aufweist. In den Umfang 22 ist eine umlaufende Nut 23 ausgebildet, in die ein horizontaler Eingriffsstift 24 eingreift und den Riegelkopf 21 in seiner in Fig. 5 dargestellten Lage bei geschlossener Fronthaube 1 hält. Der Eingriffsstift 24 durchsetzt die Umfangswand 25 eines Haltekanals 26 für den Riegelstift 20, wobei der Riegelstift 20 mit dem Riegelkopf 21 mit einem gewissen Spiel in dem Haltekanal 26 aufgenommen ist, um ein Öffnen und Schließen der Fronthaube 1 und damit ein leichtes Verkanten des Riegelstifts 20 zuzulassen. Das obere Ende des Haltekanals 26 ist von einer achsial auf den Riegelstift beweglichen Scheibe 27 bedeckt, gegen deren dem Riegelkopf 21 abgewandten Seite sich eine Feder 28 abstützt, deren anderes Ende gegen eine weitere Scheibe 29 abgestützt ist. Auf der der Feder abgewandten Seite der Scheibe 29 befindet sich ein Fortsatz 30 der Fronthaube 1, welches die Fixierung des Riegelstifts 20 mit einer auf der anderen Seite des Fortsatzes 30 angeordneten Mutter oder sonstigen Verschraubung oder Vernietung zuläßt. Hierzu durchsetzt der Riegelstift 20 eine Durchbrechung 32 im Fortsatz 30, welche vorliegend als zentriertes Rundloch ausgebildet ist, aber als Langloch ausgebildet kann, um eine horizontale Verschiebung der Fronthaube und einen Spielausgleich zuzulassen. Ein weiteres (nicht dargestelltes) Aretierglied, das manuell betätigt werden kann, verhindert, daß die Fronthaube 1 sich beim Lösen des Eingriffsstifts 24, der von der Fahrerkabine aus in bekannter Weise durch einen (nicht dargestellten) Hebel betätigbar ist, vollständig öffnen kann, sondern vielmehr in einer der entspannten Ausdehnung der Feder 28 entsprechenden Höhe arretiert wird. Nach (manuellem) Aufheben der Aretierung kann die Fronthaube 1 geöffnet werden, wie in Fig. 2 dargestellt, und bei Schließen der Fronthaube muß die Feder 28 durch Spannen der Feder 28 derart nach unten verlagert werden, daß der Eingriffsstift 24 in die Nut 23 eingreift und die Fronthaube wieder in ihre geschlossene Lage, wie in Fig. 1 dargestellt, hält.

Im Unterschied zu bekannten Haubenschlössern weist das Haubenschloß 3 einen Ausweichraum 33 auf, der sich von der in Fahrtrichtung gesehen hinteren Umfangswand 25 des Haltekanals 26 zu einem Anschlag 34, der karosserieseitig befestigt sein kann, erstreckt. Die Umfangswandung 25 ist zweigeteilt ausgebildet, und läßt ein horizontales Verlagern des hinteren Teils, der von dem Eingriffsstift 24 durchsetzt wird zu. Hierzu weist die Umfangswand 25 eine Abkröpfung 25a auf, deren endseitiger Schenkel nach oben vorsteht und in einer langlochartigen Ausnehmung 35 hineinragt. Zwischen der hinteren Umfangswandung 25 und der Anschlagwand 34 ist ein Energiespeicherglied 36 angeordnet, das vorliegend als Schraubenfeder ausgebildet ist und die hintere Umfangswand 25 in Richtung auf einen nicht dargestellten, ihre in Fig. 5 gezeigt Lage definierenden Anschlag vorspannt. Die Feder 36 ist derart gespannt, daß beim normalen Öffnen und Schließen des Haubenschlosses 3 die Umfangswand 25 keine Bewegung ausführt, wobei dieses durch die Scheibe 27, die an dem feststehenden vorderen Teil der Umfangswand 25 abgestützt wird, unterstützt wird.

Im Falle eines Fußgängeraufpralls verlagert sich wie oben beschrieben die Fronthaube um einen Betrag y, gemessen am Anschlagteil des Scharniers, nach unten, wobei darüber hinaus eine Verlagerung x in horizontaler Richtung eintritt. Diese Verlagerung x liegt deutlich oberhalb dessen, was das Blech der Fronthaube 1 an elastischer Verformung nachvollziehen kann, so daß bei einem gewöhnlichen Haubenschloß mit geringem Spiel die Änderung der Höhe y durch die Begrenzung der zugehörigen Veränderung x durch das Haubenschloß beschränkt wäre. Bei dem Haubenschloß 3 gemäß Fig. 5 dagegen ermöglicht der Ausweichraum 33 eine horizontale Verlagerung des Riegelstifts 20 mit den daran befestigten Teilen 21, 27, 28, 29, 30, 31 und somit ein Nachvollziehen der horizontalen Verlagerung x der Fronthaube 1. Hierzu wird die Feder 36 komprimiert, wobei die achsiale Verlagerungsbewegung durch die Ausnehmung 35 geführt wird und ferner die Vorspannung der Feder 28 auf die Scheibe 27, welche sich auch auf dem vorderen Bereich der Umfangswand 25 abstützt, ferner im wesentlichen horizontale Verlagerung des Haubenschlosses 3 unterstützen.

Auch der Eingriffsstift 25 ist in die Verlagerungsbewegung der Feder 36 eingebettet, so daß es nicht zu einer unbeabsichtigten Freigabe des Riegelkopfes 21 kommt. Alternativ ist es möglich, eine gezielte Freigabe bei einer Mindestverlagerung in horizontaler Richtung zuzulassen, um das Haubenschloß um den Spannbetrag der Feder 28 anzuheben und damit die Verlagerungsmöglichkeiten im Bereich der Scharniere 4 zu erhöhen.

Durch die Auswahl einer Feder 36 als Energiespeicherglied ist das Haubenschloß 3 nach einem eventuellen Nachgeben aufgrund eines Aufpralls eines Fußgängers wieder in seine Ausgangslage verlagerbar, wodurch das Haubenschloß 3 mit den Scharnieren 4 ein federndes System bildet, bei dem durch geeignete Auswahl der Federkräfte im Bereich des Haubenschlosses 3 bzw. der Scharniere 4 die Aufprallenergie eines Fußgängers gleichmäßig auf mehrere Engergiespeicher verteilbar ist.

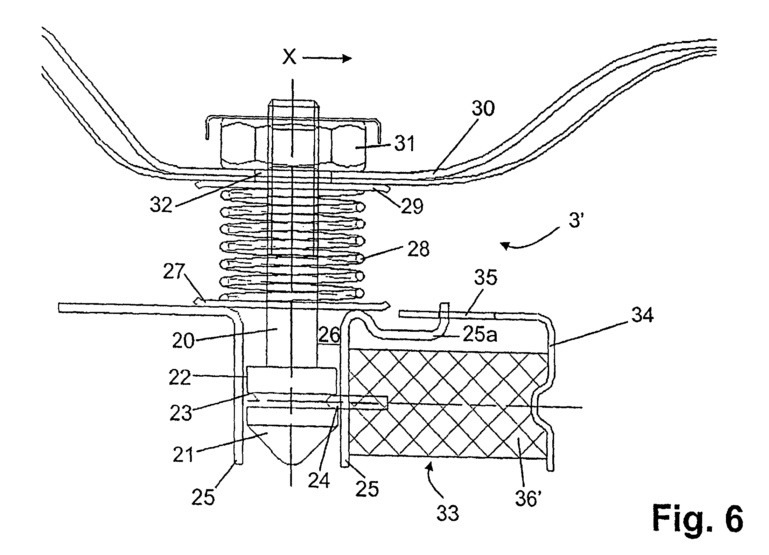

Die weitere Ausführungsform gemäß Fig. 6 ist im Prinzip aufgebaut wie das Haubenschloß gemäß Fig. 5, weshalb dieselben Bezugszeichen hierbei dieselbe Bedeutung haben. Im Unterschied zu dem Haubenschloß 3 aus Fig. 5 weist das Haubenschloß 3' aus Fig. 6 als Energiespeicherglied einen plastisch verformbares Deformier-Element 36' auf, das die horizontale Verschiebbarkeit des Haubenschließsystems unter Deformierung seines vorzugsweise aus Kunststoff ausgebildeten Deformierbestandteils zuläßt. Das Deformier-Element 36' wandelt den auf das Haubenschloß 3' übertragene Aufprallenergie in Deformationsenergie seiner Masse um, wodurch der Aufprall abgemildert wird und zugleich der Riegelstift 20 in Richtung des Pfeils x um den Betrag x verlagerbar wird. Das Deformations-Element 36' kann nach einem Aufprall leicht ersetzt werden, wodurch das Wiederherstellen der Fronthaubenanordnung nach dem Aufprall eines Fußgängers geringe Kosten und Mühe nach sich zieht.

Die Erfindung ist vorstehend anhand eines Haubenschlosses erläutert worden, das ein Einergiespeicherglied 36 aufweist, das die Energie für eine horizontale Verschiebung des Riegelstifts 20 ausgehend von der Aufprallenergie durch Umwandlung aufnimmt. Alternativ ist es möglich, eine horizontale Verlagerung für ein Haubenschloß 3 vorzusehen, bei der im wesentlichen keine Energieumwandlung stattfindet, sondern lediglich die für die Fronthaube durch die Scharniere vorgegebene Bewegung nachvollzogen wird, oder bei der durch ein Andringen über Langlöcher, die eine Preßpassung definieren, die gesamte Haubenschloßanordnung auf einer Art Schlitten setzt, welcher bei einem Aufprall nach hinten verlagert wird. Es versteht sich, daß auch Kombinationen von reversiblen und irreversiblen Energieumwandlungen und Verlagerungsbewegungen der gesamten Haubenschloßanordnung und des Riegelstifts erfindungsgemäß möglich sind.

Die Erfindung ist vorstehend anhand eines Ausführungsbeispiels eines Viergelenk-Scharniers näher erläutert worden, das reversible, als Federn ausgebildete Energiespeicher aufweist, die besonders bevorzugt sind. Es versteht sich, daß in gleicher Weise wie die Federn auch plastisch änderbare Materialbestandteile vorgesehen sein können, die eine irreversibel Längenänderung des Lenkers 6 bewirken, die dadurch einen geringeren mechanischen Aufwand bei der Montage und bei der Fertigung bedeuten.

Die Erfindung ist vorstehend anhand eines Viergelenk-Scharniers erläutert worden, das den Abstand der Gefenkachsen eines Lenkers zum Absenken der Fronthaube 1 unter der Last eines Fußgängeraufpralls verändert. Ebenso ist es möglich, hierzu einen Lenker brechen zu lassen oder zweiteilbar auszubilden, oder den Abstand von entweder zweier karosserieseitiger oder zweier fronthaubenseitiger Gelenkachsen unter der Last eines Fußgängeraufpralls zueinander veränderbar auszubilden.

## Patentansprüche

1. Fronthaubenanordnung, bei der eine Fronthaube (1) eines Fahrzeugs über mindestens ein Scharnier (4) an den Rahmen des Fahrzeugs angelenkt ist, welche Fronthaube (1) ferner über wenigstens ein Haubenschloß (3) verriegelbar ist, wobei das Haubenschloß (3) in seinem verriegelten Zustand unter der Einwirkung einer Last eines Fußgängers ein horizontales Verlagern (x) der Fronthaube (1) zuläßt,
**dadurch gekennzeichnet,**
**daß** das Scharnier (4) im fahrbereiten Zustand des Fahrzeugs in einer nachgiebigen angehobenen Lage angeordnet ist.

2. Fronthaubenanordnung nach Anspruch 1, **dadurch gekennzeichnet, daß** das Haubenschloß (3; 3') in seinem verriegelten Zustand unter dem Aufprall eines Fußgängers insgesamt mit der Fronthaube (1) horizontal (x) verlagerbar ist.

3. Fronthaubenanordnung nach Anspruch 1, **dadurch gekennzeichnet, daß** das Haubenschloß (3) einen Ausweichraum im Anschluß an seine verriegelte Schließlage aufweist, der eine Führung für eine überwiegend horizontale Verlagerung der Fronthaube (1) bzw. eines mit der Fronthaube (1) verbundenen Haiteteils nach hinten definiert.

4. Fronthaubenanordnung nach Anspruch 3, **dadurch gekennzeichnet, daß** ein Energiespeicherglied das Haubenschloß (3) entgegen einem horizontalen Verlagern (x) vorspannt und bei einem Aufprall das Energiespeicherglied unter Aufnahme eines Teils der Aufprallenergie spannbar ist.

5. Fronthaubenanordnung nach Anspruch 4, **dadurch gekennzeichnet, daß** das Energiespeicherglied eine Feder umfaßt, die spannbar ausgebildet ist.

6. Fronthaubenanordnung nach Anspruch 4 oder 5, **dadurch gekennzeichnet, daß** das Energiespeicherglied einen deformierbaren Bestandteil umfaßt, der die Aufprallenergie in Deformationsenergie durch plastische Formänderung des Bestandteils umwandelt.

7. Fronthaubenanordnung nach einem der Ansprüche 1 bis 6, **dadurch gekennzeichnet, daß** bei Überschreiten einer einem Aufprall eines Fußgängers entsprechenden Schwellenlast die sonst zum Öffnen der Fronthaube (1) ausgelegten Scharniere Mittel zum Ermöglichen einer vertikalen und horizontalen Verlagerung der Fronthaube (1) umfassen.

8. Fronthaubenanordnung nach einem der Ansprüche 1 bis 7, **dadurch gekennzeichnet, daß** das Scharnier als Mehrgelenk-Scharnier (4) ausgebildet ist.

9. Fronthaubenanordnung nach Anspruch 8, **dadurch gekennzeichnet, daß** das Mehrgelenk-Scharnier als Viergelenk-Scharnier (4) ausgebildet ist.

10. Fronthaubenanordnung nach Anspruch 8, **dadurch gekennzeichnet, daß** das Mehrgelenk-Scharnier (4) als Zweigelenk-Scharnier ausgebildet ist.

11. Fronthaubenanordnung nach Anspruch 8, **dadurch gekennzeichnet, daß** das Mehrgelenk-Scharnier (4) als Siebengelenk-Scharnier ausgebildet ist.

12. Fronthaubenanordnung nach einem der Ansprüche 8 bis 11, **dadurch gekennzeichnet, daß** das Mehrgelenk-Scharnier (4) derart an dem Rahmen des Fahrzeugs angeordnet ist, daß die Fronthaube (1) bei Lösen des Haubenschlosses (3) ohne Veränderung der Lage eines Gelenks (9) des Mehrgelenk-Scharniers (4; 4'; 4"; 4'") öffnenbar ist.

13. Fronthaubenanordnung nach einem der Ansprüche 8 bis 12, **dadurch gekennzeichnet, daß** wenigstens ein Lenker des Mehrgelenk-Schaniers (4) mit veränderbarer Länge ausgebildet ist.

14. Fronthaubenanordnung nach einem der Ansprüche 8 bis 12, **dadurch gekennzeichnet, daß** wenigstens ein Lenker des Mehrgelenk-Schaniers (4) wenigstens zweiteilbar ausgebildet ist.

15. Fronthaubenanordnung nach einem der Ansprüche 8 bis 12, **dadurch gekennzeichnet, daß** wenigstens ein Lenker des Mehrgelenk-Scharnier (4) wenigstens ein Gelenk zum Anlenken an Fronthaube oder Karoserie aufweist, das in seiner Lage veränderbar ist.

16. Fronthaubenanordnung nach einem der Ansprüche 8 bis 12, **dadurch gekennzeichnet, daß** wenigstens ein Lenker des Mehrgelenk-Scharnier (4) wenigstens einen unter der Last eines Fußgängeraufpralls brechenden Lenker aufweist.

17. Fronthaubenanordnung nach einem der Ansprüche 8 bis 16, **dadurch gekennzeichnet, daß** der Abstand der beiden Anlenkungen wenigstens zweier benachbarter Lenker des Mehrgelenk-Scharniers (4) an demselben Anschlagteil und/oder der Abstand der Anlenkungen desselben Lenkers des Mehrgelenk-Scharniers (4) an jeweils einem Anschlagteil durch eine Überlast veränderbar ist.

18. Fronthaubenanordnung nach einem der Ansprüche 1 bis 17, **dadurch gekennzeichnet, daß** das Haubenschloß (3) an der in Fahrtrichtung hinteren Seite des frontalen Querträgers der Karosserie angeordnet ist.

## Claims

1. A front-hood arrangement, wherein a front hood (1) of a vehicle is coupled to the frame of the vehicle via at least one hinge (4), which front hood (1) can also be locked by means of at least one hood lock (3), wherein the hood lock (3), in its locked state, allows a horizontal displacement (x) of the front hood (1)
**characterized in**
**that** the hinge (4), when the vehicle is ready to drive, is arranged in a resilient raised position

2. The front-hood arrangement as claimed in claim 1, **characterized in that** the hood lock (3; 3'), in its locked state, under the impact of a pedestrian, can overall, together with the front hood (1), be displaced in the horizontal direction (x).

3. The front-hood arrangement as claimed in claim 1, **characterized in that** the hood lock (3) has a yielding space adjoining its locked closed position, this space defining a guide means for a substantially horizontal displacement of the front hood (1) or of a holding part connected to the front hood (1) toward the rear.

4. The front-hood arrangement as claimed in claim 3, **characterized in that** an energy storage member prestresses the hood lock (3) in the opposite direction to a horizontal displacement (x), and in the event of an impact the energy storage member can be stressed, absorbing some of the impact energy.

5. The front-hood arrangement as claimed in claim 4, **characterized in that** the energy storage member comprises a spring which is designed so that it can be stressed.

6. The front-hood arrangement as claimed in claim 4 or 5, **characterized in that** the energy storage member comprises a deformable component which converts the impact energy into deformation energy through plastic deformation of the component.

7. The front-hood arrangement as claimed in one of claims 1 to 6, **characterized in that** when a threshold load corresponding to an impact of a pedestrian is exceeded, the hinges that are otherwise designed for opening the front hood (1) comprise means for allowing a vertical and horizontal displacement of the front hood (1).

8. The front-hood arrangement as claimed in one of claims 1 to 7, **characterized in that** the hinge is designed as a multiple-joint hinge (4).

9. The front-hood arrangement as claimed in claim 8, **characterized in that** the multiple-joint hinge is designed as a four-joint hinge (4).

10. The front-hood arrangement as claimed in claim 8, **characterized in that** the multiple-joint hinge (4) is designed as a two-joint hinge.

11. The front-hood arrangement as claimed in claim 8, **characterized in that** the multiple-joint hinge (4) is designed as a seven-joint hinge.

12. The front-hood arrangement as claimed in one of claims 8 to 11, **characterized in that** the multiple-joint hinge (4) is arranged on the frame of the vehicle, in such a manner that the front hood (1), when the hood lock (3) is released, can be opened without the position of the joint (9) of the multiple-joint hinge (4; 4'; 4"; 4"') changing.

13. The front-hood arrangement as claimed in one of claims 8 to 12, **characterized in that** at least one link of the multiple-joint hinge (4) is designed to change in length.

14. The front-hood arrangement as claimed in one of claims 8 to 12, **characterized in that** at least one link of the multiple-joint hinge (4) is designed so that it can be separated into at least two parts.

15. The front-hood arrangement as claimed in one of claims 8 to 12, **characterized in that** at least one link of the multiple-joint hinge (4) has at least one joint, for coupling to front hood or body, which can change in position.

16. The front-hood arrangement as claimed in one of claims 8 to 12, **characterized in that** at least one link of the multiple-joint hinge (4) has at least one link which breaks under the load of a pedestrian impact.

17. The front-hood arrangement as claimed in one of claims 8 to 16, **characterized in that** the distance between the two coupling points of at least two adjacent links of the multiple-joint hinge (4) on the same mounting part and/or the distance between the coupling points of the same link of the multiple-joint hinge (4) to one mounting part, respectively, can be changed as a result of an overload.

18. The front-hood arrangement as claimed in one of claims 1 to 17, **characterized in that** the hood lock (3) is arranged on the rear side, as seen in the direction of travel, of the front cross member of the body.

## Revendications

1. Ensemble de capot avant dans lequel un capot avant (1) d'un véhicule est articulé au moyen d'au moins une charnière (4) sur le châssis du véhicule, lequel capot avant (1) peut en outre être verrouillé au moyen d'au moins une serrure de capot (3), la serrure de capot (3) permettant lorsqu'elle est verrouillée un déplacement horizontal (x) du capot avant (1) sous l'action d'un effort provoqué par un piéton,
**caractérisé en ce**
**que** la charnière (4) est agencée dans une position soulevée, lorsque le véhicule est prêt à rouler.

2. Ensemble de capot avant selon la revendication 1, **caractérisé en ce que** la serrure de capot (3; 3') est déplaçable horizontalement (x) conjointement avec le capot avant (1) lors de la collision avec un piéton, lorsque ladite serrure de capot est verrouillée.

3. Ensemble de capot avant selon la revendication 1, **caractérisé en ce que** la serrure de capot (3) comporte un espace d'évitement dans le raccordement à sa position de fermeture verrouillée, lequel espace définit vers l'arrière un guide pour un déplacement essentiellement horizontal du capot avant (1) ou d'une partie de retenue reliée au capot avant (1).

4. Ensemble de capot avant selon la revendication 3, **caractérisé en ce qu'**un élément accumulateur d'énergie de la serrure arrière (3) est préalablement tendu en s'opposant à un déplacement horizontal (x) et en cas de collision l'élément accumulateur d'énergie peut être tendu en recevant une partie de l'énergie de la collision.

5. Ensemble de capot avant selon la revendication 4, **caractérisé en ce que** l'élément accumulateur d'énergie comporte un ressort qui est conformé de façon à pouvoir être tendu.

6. Ensemble de capot avant selon la revendication 4 ou 5, **caractérisé en ce que** l'élément accumulateur d'énergie comporte un composant déformable qui transforme l'énergie de la collision en énergie de déformation par déformation plastique du composant.

7. Ensemble de capot avant selon l'une des revendications 1, **caractérisé en ce que**, lors du dépassement d'une valeur d'effort de seuil correspondant à une collision avec un piéton, les charnières montées par ailleurs en vue d'ouvrir le capot avant (1) comportent des moyens pour permettre un déplacement vertical et horizontal du capot avant (1).

8. Ensemble de capot avant selon l'une des revendications 1 à 7, **caractérisé en ce que** la charnière se présente sous la forme d'une charnière à multiple articulations (4).

9. Ensemble de capot avant selon la revendication 8, **caractérisé en ce que** la charnière à multiple articulations se présente sous la forme d'une chamière à quadruple articulations (4).

10. Ensemble de capot avant selon la revendication 8, **caractérisé en ce que** la charnière à multiple articulations (4) se présente sous la forme d'une charnière à double articulations.

11. Ensemble de capot avant selon la revendication 8, **caractérisé en ce que** la charnière à multiple articulations (4) se présente sous la forme d'une charnière à septuple articulations.

12. Ensemble de capot avant selon l'une des revendications 8 à 11, **caractérisé en ce que** la charnière à multiple articulations (4) est agencée sur le châssis du véhicule de telle façon que le capot avant (1) peut être ouvert lors du détachement de la serrure de capot (3) sans modifier la position d'une articulation (9) de la charnière à multiple articulations (4 ; 4' ; 4" ; 4"').

13. Ensemble de capot avant selon l'une des revendications 8 à 12, **caractérisé en ce que** au moins un bras de la charnière à multiple articulations (4) est conformé pour avoir une longueur variable.

14. Ensemble de capot avant selon l'une des revendications 8 à 12, **caractérisé en ce que** au moins un bras de la charnière à multiple articulations (4) est conformée pour être divisible en au moins deux parties.

15. Ensemble de capot avant selon l'une des revendications 8 à 12, **caractérisé en ce que** au moins un bras de la charnière à multiple articulations (4) comporte au moins une articulation s'articulant sur le capot avant ou la carrosserie et dont la position peut être modifiée.

16. Ensemble de capot avant selon l'une des revendications 8 à 12, **caractérisé en ce que** au moins un bras de la charnière à multiple articulations (4) comporte au moins un bras se brisant sous l'effort généré par une collision avec un piéton.

17. Ensemble de capot avant selon l'une des revendications 8 à 16, **caractérisé en ce que** la distance entre les deux articulations d'au moins deux bras adjacents de la charnière à multiple articulations (4) peut être modifiée par une surcharge au niveau de la même pièce de fixation et/ou la distance entre les articulations du même bras de la charnière à multiple articulations (4) peut être modifiée par une surcharge au niveau d'une pièce de fixation.

18. Ensemble de capot avant selon l'une des revendications 1 à 17, **caractérisé en ce que** la serrure de capot (3) est agencée du côté arrière, dans le sens de roulement, du longeron transversal avant de la carrosserie.
